**Europäisches Patentamt**

**European Patent Office**

**Office européen des brevets**

(19)

(11) Veröffentlichungsnummer: **0 042 579**

**A1**

(12) # EUROPÄISCHE PATENTANMELDUNG

(21) Anmeldenummer: **81104639.0**

(22) Anmeldetag: **16.06.81**

(51) Int. Cl.³: **E 01 F 8/00**
**F 24 J 3/02**

(30) Priorität: **21.06.80 DE 3023250**

(43) Veröffentlichungstag der Anmeldung:
**30.12.81 Patentblatt 81/52**

(84) Benannte Vertragsstaaten:
**AT BE CH DE FR GB IT LI LU NL SE**

(71) Anmelder: **Gebrüder Uhl GmbH & Co KG**
**Bergstrasse 17**
**D-7981 Vogt bei Ravensburg(DE)**

(72) Erfinder: **Möller, Rolf W., Dr.-Ing.**
**Epplingser Halde 14**
**D-7988 Wangen / Allg.(DE)**

(74) Vertreter: **Engelhardt, Guido**
**Ehlersstrasse 17**
**D-7990 Friedrichshafen1(DE)**

(54) **Lärm- und Sichtschutzwand.**

(57) Ein Lärm- oder Sichtschutzwand (1), die insbesondere zur Abschirmung der von Straßen- und/oder Schienenfahrzeugen hervorgerufenen Geräusche verwendbar ist, ist zur Aufnahme oder Abgabe von Wärmeenergie aus einem oder mehreren, über- oder nebeneinander angeordneten Absorbern zusammengesetzt oder eine oder mehrere Außenseiten einer ein- oder mehrteiligen Schutzwand sind als Absorber ausgebildet. Die Absorber (11) bestehen hierbei aus nebeneinander gereihten und/oder übereinander angeordneten, sich vorzugsweise teilweise überdeckenden Profillamellen (12), die über Sammelrohre (14) untereinander und/oder über einen Wärme- oder Kältekreislauf verbunden sind.

Die in dieser Weise gebidete Lärm- oder Sichtschutzwand dient somit nicht nur der Schalldämmung, sondern zugleich auch der Aufnahme oder Abgabe von Wärmeenergie. Durch diese Ausgestaltung ist es nämlich mit geringem Bauaufwand möglich, vor allem ohne daß zusätzliche, meist störende Bauwerke zu erstellen sind, Absorber auf einfache Weise zu installieren und mit diesen vorhandene Wärmeenergie zu nutzen. Es ist somit eine Vorrichtung geschaffen, mittels der mit nur geringem Mehraufwand ein wirksamer Schutz vor Lärm erreicht wird, wobei durch die Absorber eine zusätzliche Brechung der Schallwellen gegeben ist und außerdem vorhandene Wärmeenergie genutzt wird.

EP 0 042 579 A1

./...

FIG. 1

Gebrüder Uhl GmbH & Co. KG
7981 Vogt üb. Ravensburg

Lärm- und Sichtschutzwand

Die Erfindung bezieht sich auf eine Lärm- oder Sichtschutzwand, insbesondere zur Abschirmung der von Strassen- und/
oder Schienenfahrzeugen hervorgerufenen Geräusche.

Im Zeichen des hohen und noch weiter steigenden Verkehrsaufkommens wird es wegen der damit verbundenen Lärmbelästigung
der Bevölkerung immer dringlicher, diese davor durch geeignete Massnahmen zu schützen. Dies kann dadurch geschehen,
dass entlang der Verkehrswege Lärmschutzwände angebracht
werden.

Solche Lärmschutzwände bestehen meist aus einem oder mehreren
aufeinander gestapelten Elementen, die in Längsrichtung aneinandergereiht sind. Die Verbindung und Halterung der
Elemente erfolgt bevorzugt mittels H-förmig ausgebildeter
Vertikalstützen, in denen die Elemente gehalten sind.
Als Werkstoffe für derartige Lärmschutzwände kommen
neben Beton, Holz, Stahl usw. auch zunehmend Aluminium oder Kunststoff zum Einsatz. Die zuletzt

./.

genannten Werkstoffe haben neben der Wartungsfreiheit und
Witterungsbeständigkeit auch den grossen Vorzug der Leichtgewichtigkeit; dies ist vor allem beim Transport und bei der
Montage vorteilhaft. Dennoch erfordern die bekannten Lärmschutzwände einen beträchtlichen Kostenaufwand, der aufgrund der                Lärmbelästigung zwar gerechtfertigt ist, volkswirtschaftlich gesehen aber relativ wenig
Nutzen bringt.

Es ist daher Aufgabe der Erfindung, eine Lärm- oder Sichtschutzwand zu schaffen, die mit geringem zusätzlichen Aufwand auch zur Energienutzung verwendbar ist, so dass das
Kosten-Nutzen-Verhältnis in einem erheblichen Masse verbessert wird und weitere Verwendungsmöglichkeiten derartiger
Schutzwände gegeben sind.

Gemäss der Erfindung wird dies dadurch erreicht, dass die
Schutzwand zur Aufnahme oder Abgabe von Wärmeenergie aus
einem oder mehreren, über- oder nebeneinander angeordneten
Absorbern zusammengesetzt ist oder dass eine oder beide
Aussenseiten einer ein- oder mehrteiligen Schutzwand als
Absorber ausgebildet sind.

Zweckmässig ist es hierbei, den Absorber aus nebeneinander
gereihten und/oder übereinander angeordneten sich vorzugsweise teilweise überdeckenden Profillamellen zu bilden, die
über Sammelrohre untereinander und/oder mit einem Wärme-
oder Kältekreislauf verbunden sind.

Die mit Absorbern versehene Schutzwand kann in vorteilhafter
Weise aus stapelbaren neben- oder übereinander angeordneten
Elementen bestehen, wobei es angebracht ist, dass diese einen
metallischen Rahmen aufweisen, dessen Ober- und Unterteile
jeweils kongruent zueinander satteldachförmig geneigt ausgebildet und die Oberteile des Rahmens ein- oder beidseitig

./.

mit einem überstehenden Vorsprung zur Abdeckung der Absorber und/oder der Sammelrohre versehen sind.

Zur Brechung der Schallwellen kann die Schutzwand oder der Absorber auf der der Schallquelle zugekehrten Seite mit einer Perforierung versehen sein, wobei hinter dieser eine oder mehrere Lagen aus schalldämmendem Material angeordnet werden können.

Wird eine Lärm- oder Sichtschutzwand gemäss der Erfindung ausgebildet, so dient diese nicht nur der Schalldämmung, sondern zugleich auch der Aufnahme oder Abgabe von Wärmeenergie. Durch die Ausgestaltung einer Schutzwand als Absorber oder deren Kombination miteinander ist es mit geringem Bauaufwand möglich, vor allem ohne dass zusätzliche meist störende Bauwerke zu erstellen sind, Absorber auf einfache Weise zu installieren und mit diesen vorhandene Wärmeenergie beispielsweise für Heizzwecke zu nutzen. Dabei ist auch von Vorteil, dass Lärm- und Sichtschutzwände nahezu immer in der Nähe von Wohngebieten errichtet werden und dass im unmittelbaren Bereich der Verkehrswege das Temperaturniveau höher liegt als im freien Gelände. Zu einer weiteren Temperaturerhöhung im Absorber trägt ferner die Absorbtion der auf diesen auftreffenden Schallwellen bei. Der Aufwand für die Installation der Leitungen hält sich demnach im Rahmen.

Durch die erfindungsgemässe Ausgestaltung wird somit eine Vorrichtung geschaffen, mittels der mit nur geringem Mehraufwand ein wirksamer Schutz vor Lärm erreicht wird, wobei durch die Absorber eine zusätzliche Brechung der Schallwellen gegeben ist und ausserdem wird vorhandene Wärmeenergie genutzt. Das Kosten-Nutzen-Verhältnis ist somit bei einer derartigen Kombination erheblich günstiger als bei getrennter Anordnung, zumal sich durch die Verbindung der Absorber mit einer Schutzwand erhebliche Material- und Kosteneinsparungen ergeben.

4

Weitere Einzelheiten sind dem in der Zeichnung dargestellten Ausführungsbeispiel einer aus einzelnen Elementen zusammengesetzten mit Absorbern versehenen Lärm- oder Sichtschutzwand zu entnehmen. Hierbei zeigt jeweils in schematischer Darstellung:

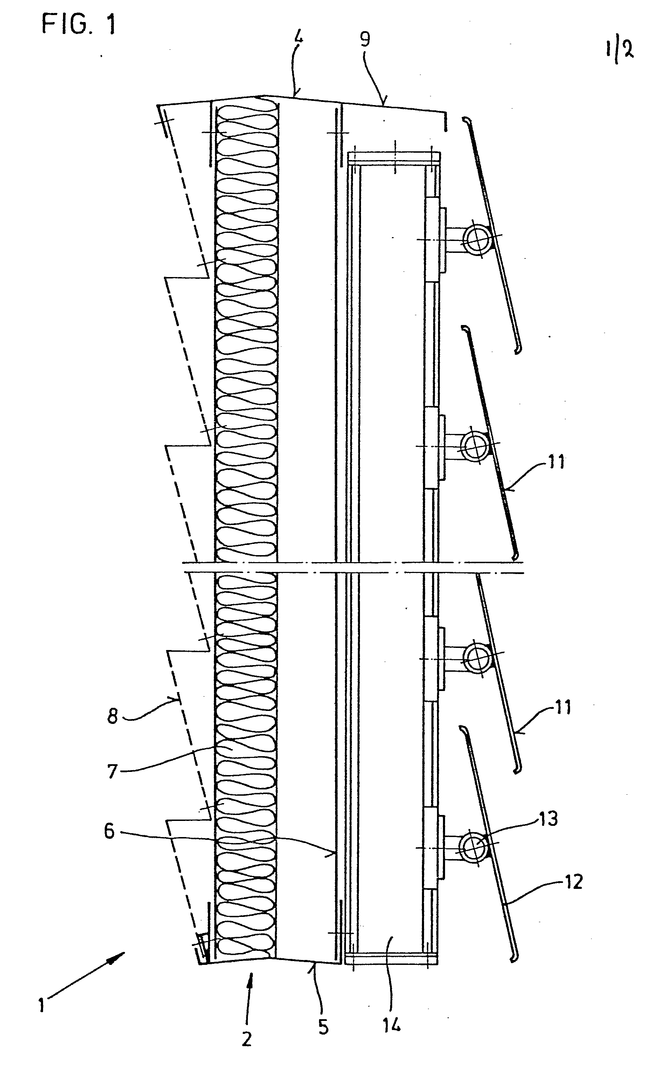

Fig. 1  ein mit Absorbern ausgestattetes Element einer Schutzwand in einem Vertikalschnitt und

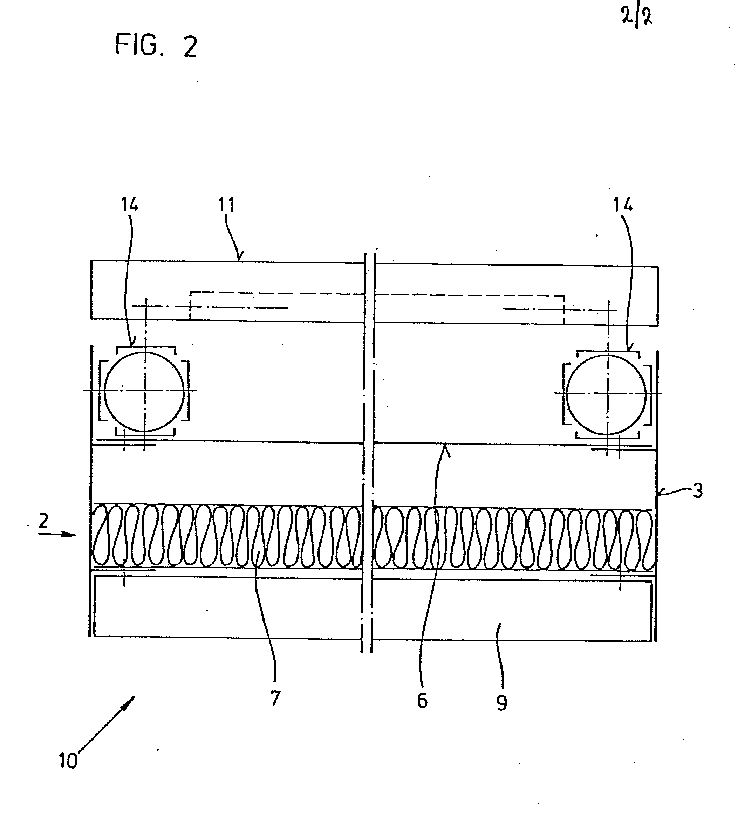

Fig. 2  das Element nach Fig. 1 in Draufsicht.

Die mit 1 bezeichnete Lärm- oder Sichtschutzwand ist aus einzelnen stapelbaren Elementen 1o zusammengesetzt, die z.B. in H-förmig gestaltete Vertikalstützen gehalten sind und jeweils einen Rahmen 2 aufweisen, an dem Absorber 11 zur Aufnahme oder Abgabe von Wärmeenergie angebracht sind. Der Rahmen 2 besteht hierbei aus zwei Seitenteilen 3 sowie einem Oberteil 4 und einem Unterteil 5, die jeweils kongruent zueinander satteldachförmig geneigt ausgebildet sind, so dass sich die einzelnen Elemente 1o bei einer Aufeinanderanordnung von selbst zentrieren und gegeneinander gehalten sind. Über eine Platte 6 sind die Seitenteile 3 sowie das Oberteil 4 und das Unterteil 5 fest miteinander verbunden. In dem Rahmen 2 ist des weiteren schalldämmendes Material 7 angeordnet, ferner ist auf der der Schallquelle zugekehrten Aussenseite eine aus einzelnen gelochten Blechen gebildete Perforierung 8, um die Schallwellen zu brechen, vorgesehen.

Die auf der Aussenseite der Schutzwand 1 angeordneten Absorber 11 bestehen aus Profillamellen 12, die verstellbar sein können und einen zentralen von einem Wärmeträgermedium

5

durchströmbaren Kanal 13 aufweisen. Ausserdem sind lotrecht verlaufende Sammelrohre 14 vorgesehen, an die die Kanäle 13 angeschlossen sind und die über nicht dargestellte Erdleitungen mit einem Wärmekreislauf in Verbindung stehen. Die von den Profillamellen 12 beispielsweise aufgenommene Wärmeenergie wird von diesen an das Wärmeträgermedium, das die Kanäle 13 sowie die Sammelrohre 14 durchströmt, abgegeben und somit dem Wärme- oder Kältekreislauf zugeführt.

A 8756 e-m
16. Juni 1980

- 1 -

Gebrüder Uhl GmbH & Co. KG
7981 Vogt üb. Ravensburg

Patentansprüche:

1. Lärm- oder Sichtschutzwand, insbesondere zur Abschirmung
der von Strassen- und/oder Schienenfahrzeugen hervorgerufenen Geräusche,

d a d u r c h   g e k e n n z e i c h n e t ,

dass die Schutzwand (1) zur Aufnahme oder Abgabe von
Wärmeenergie aus einem oder mehreren, über- oder nebeneinander angeordneten Absorbern (11) zusammengesetzt ist
oder dass eine oder beide Aussenseiten einer ein- oder
mehrteiligen Schutzwand (1) als Absorber (11) ausgebildet sind.

2. Lärm- oder Sichtschutzwand nach Anspruch 1,

d a d u r c h   g e k e n n z e i c h n e t ,

dass der Absorber (11) aus nebeneinander gereihten und/oder
übereinander angeordneten, sich vorzugsweise teilweise
überdeckenden Profillamellen (12) gebildet ist, die über

./.

Sammelrohre (14) untereinander und/oder mit einem Wärme-
oder Kältekreislauf verbunden sind.

3. Lärm- oder Sichtschutzwand nach Anspruch 1 oder 2,

d a d u r c h  g e k e n n z e i c h n e t ,

dass die mit Absorbern (11) versehene Schutzwand (1) aus
stapelbaren neben- oder übereinander angeordneten Elementen
(1o) besteht.

4. Lärm- oder Sichtschutzwand nach Anspruch 3,

d a d u r c h  g e k e n n z e i c h n e t ,

dass die Elemente (1o)einen metallischen Rahmen (2) aufweisen, dessen Ober- und Unterteile (4, 5) jeweils kongruent zueinander satteldachförmig geneigt ausgebildet
sind.

5. Lärm- oder Sichtschutzwand nach Anspruch 3 oder 4,

d a d u r c h  g e k e n n z e i c h n e t ,

dass die Oberteile (4) des Rahmens (2) ein- oder beidseitig
mit einem überstehenden Vorsprung (9) zur Abdeckung der
Absorber (11) und/oder der Sammelrohre (14) versehen sind.

6. Lärm- oder Sichtschutzwand nach einem der Ansprüche 1 bis 5,

d a d u r c h  g e k e n n z e i c h n e t ,

./.

0042579

- 3 -

dass die Schutzwand (1) oder der Absorber (11) auf der der Schallquelle zugekehrten Seite mit einer Perforierung (8) versehen ist.

7. Lärm- oder Sichtschutzwand nach Anspruch 6,

d a d u r c h   g e k e n n z e i c h n e t ,

dass hinter der Perforierung (8) eine oder mehrere Lagen aus schalldämmenden Material (7) angeordnet sind.

A 8756   e-m
16. Juni 1980

FIG. 1

0042579

1|2

FIG. 2

Europäisches
Patentamt

**EUROPÄISCHER RECHERCHENBERICHT**

| KLASSIFIKATION DER ANMELDUNG (Int. Cl.³) | | |
|---|---|---|

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 4 164 933 (A.C. ALOSI) <br> * Spalte 5, Zeilen 25 bis 28; Fig. 8 * <br> -- | 1 |
| | DE - A1 - 2 449 277 (P.M. PRELORENZO) <br> * Seite 6, Absatz 3 bis Seite 10, <br> Absatz 4; Fig. 2 bis 4 * <br> -- | 1,2 |
| | DE - A1 - 2 850 588 (J.F. NOLD & CO.) <br> * Ansprüche 1 bis 11 * <br> -- | 3,4,6, 7 |
| | DE - A - 2 012 519 (LÄRMSCHUTZ-BIERGANS <br> & CO. KG) <br> * Fig. 1, 2, 5 * <br> -- | 3,4 |
| A | US - A - 4 136 856 (R. H. MURDOCK) <br> ---- | |

**KLASSIFIKATION DER ANMELDUNG (Int. Cl.³)**

E 01 F   8/00
F 24 J   3/02

**RECHERCHIERTE SACHGEBIETE (Int. Cl.³)**

E 01 F   7/00
E 01 F   8/00
F 24 J   3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
   liegende Theorien oder
   Grundsätze
E: kollidierende Anmeldung
D: in der Anmeldung angeführtes
   Dokument
L: aus andern Gründen
   angeführtes Dokument
&: Mitglied der gleichen Patentfamilie,  übereinstimmendes
   Dokument

Der vorliegende Recherchenbericht wurde für alle Patentansprüche erstellt.

| Recherchenort | Abschlußdatum der Recherche | Prüfer |
|---|---|---|
| Berlin | 07-09-1981 | PAETZEL |

EPA form 1503.1  06.78